# FASCICULE DE BREVET EUROPEEN

(11) **EP 0 856 859 B1**
(45) Date de publication et mention de la délivrance du brevet: **08.10.2003**
(21) Numéro de dépôt: 98400114.9
(22) Date de dépôt: 21.01.1998
(51) Int. Cl.: H01G 4/22

(54) **Procédé d'imprégnation de condensateurs électriques**
Imprägnierungsverfahren von elektrischen Kondensatoren
Impregnation process for electric capacitors

(30) Priorité: 31.01.1997 FR 9701079
(43) Date de publication de la demande: 05.08.1998
(73) Titulaire: Atofina, 92800 Puteaux (FR)
(72) Inventeur: Berger, Noelle, 69130 Ecully (FR)

(56) Documents cités:
- DE-A- 3 117 318
- US-A- 3 588 643

## Description

L'invention concerne un procédé de double imprégnation de condensateurs électriques utilisables notamment pour tension alternative (50 Hz) et pour tension continue avec décharge et/ou avec inversion de phase.

Les condensateurs concernés peuvent avoir des armatures métallisées ou bien constituées de feuille d'aluminium.

Le brevet US 1 989 046 décrit un procédé d'imprégnation de condensateurs électriques qui consiste à imprégner dans une première étape des enroulements constitués de feuilles de papier et de feuilles de métal, avec une huile ayant une constante diélectrique élevée telle que l'huile de ricin puis, dans une seconde étape, on introduit lesdits enroulements convenablement imprégnés dans un boîtier rempli d'une quantité suffisante d'une huile minérale pour enrober totalement lesdits enroulements.

L'huile minérale contenue dans le boîtier doit posséder des points d'éclair et d'ébullition élevés et être chimiquement inerte.

Cette façon de procéder présente l'inconvénient que les deux liquides peuvent se mélanger et ainsi entraîner à long terme une dégradation des enroulements qui ne seraient que partiellement imprégnés par l'huile diélectrique.

En outre, en cas de claquage avec rupture du boîtier et inflammation, il y a un risque de propagation du feu par jet de liquide enflammé.

Dans le condensateur à film métallisé connu de US-A-3 588 643, le bobinage est, après imprégnation avec de l'huile castor comme fluide diélectrique, traité avec un polyisocyanate pour former une couverture polymérique qui sert de boitier. La formation de gél doit être évitée.

On a maintenant trouvé un procédé de double imprégnation de condensateurs électriques comprenant au moins un bobinage et un boitier, caractérisé en ce que l'on effectue les étapes suivantes :
a) on imprègne le bobinage avec un fluide diélectrique (A), puis on le soumet éventuellement à un traitement thermique,
b) on élimine l'excès dudit fluide (A),
c) on remplit le boîtier contenant le bobinage imprégné en a) avec une composition gélifiable comprenant au moins un polyol, au moins un polyisocyanate, éventuellement au moins un catalyseur et le fluide diélectrique (A) utilisé en a) et,
d) on gélifie ladite composition gélifiable.

Par excès dudit fluide (A), on désigne présentement la quantité dudit fluide non retenu par le bobinage.

Dans le procédé selon la présente invention, on désigne par bobinage tout enroulement constitué d'un solide diélectrique en couches minces séparées par des armatures métalliques. Lesdites armatures peuvent être constituées de feuille d'aluminium, de papier doublement métallisé ou par la couche de métallisation du solide diélectrique. Le solide diélectrique peut être du papier, une polyoléfine telle que le polypropylène, un polyester ou une association de ces matériaux.

Dans le procédé selon la présente invention, le fluide diélectrique (A) est choisi dans le groupe constitué par les alkylbenzènes tels que le décylbenzène, le dodécylbenzène ; les composés alkylpolyaromatiques comme le monoisopropylbiphényle (MIPB), les phénylxylyléthanes (PXE) ; les mélanges de benzyltoluènes et (benzyl)benzyltoluènes tels que ceux décrits notamment dans le brevet européen n° 136230 ; les mélange de mono-et bis (méthylbenzyl)xylènes tels que ceux décrits dans la demande de brevet européen n° 0443899 ; les mélanges de benzyltoluène et de diphényléthane ; les phtalates d'alkyle tels que le dibutylphtalate, le dioctylphtalate, les esters aliphatiques tels que le dioctylsébaçate, le dioctyladipate, le dibutylsébaçate ; les huiles végétales telles que les huiles de colza, les huiles de maïs, l'huile de ricin et les huiles de soja, ainsi que la combinaison d'au moins deux des fluides diélectriques précédemment mentionnés.

Dans le cas de condensateur à film polypropylène et armature d'aluminium, on utilisera de préférence, des mélanges de benzyltoluènes et de (benzyl)benzyltoluènes comprenant de 50 % à 90 % en poids de benzyltoluènes (mélange des isomères o, m et p) et de 50 % à 10 % en poids (benzyl) benzyltoluènes.

Dans le cas de condensateur à armatures métallisées, on utilisera de préférence une huile de colza, un ester aliphatique tel que le dibutylsébaçate, du dioctylphtalate, du dodécylbenzène, un mélange d'au moins deux des fluides diélectriques mentionnées ci-avant ou un mélange d'huile de colza et du mélange benzyltoluènes-(benzyl)benzyltoluènes.

Dans le procédé selon la présente invention, le polyisocyanate utilisé pour préparer la composition gélifiable peut être choisi parmi les polyisocyanates aromatiques, aliphatiques, cycloaliphatiques et ceux qui contiennnent dans leur molécule un cycle isocyanurate, ayant au moins deux fonctions isocyanate dans leur molécule, susceptibles de réagir avec des fonctions hydroxyle d'un polyol pour former un réseau polyuréthane tri-dimensionnel provoquant une gélification de la composition.

A titre d'illustration de polyisocyanates aromatiques utilisables selon la présente invention, on citera le 4,4'-diphénylméthane diisocyanate (MDI), les MDI polymériques, le triphénylméthane triisocyanate.

A titre d'illustration de polyisocyanate aliphatique utilisable selon la présente invention, on citera le biuret du diisocyanato-1,6 hexane.

A titre d'illustration de polyisocyanates cycloaliphatiques, on citera l'isophorone diisocyanate (lPDl), le cyclohexyldiisocyanate (CHDI), le 4,4'-dicyclohexylméthane diisocyanate.

A titre d'illustration de polyisocyanates qui contiennent dans leur molécule le cycle isocyanurate, on citera les trimères de l'hexaméthylène diisocyanate commercialisés par la Société Rhône-Poulenc sous la dénominatiion TOLONATE HDT, le tris [1-(isocyanotométhyl)-1,3,3-triméthylcyclohexane] isocyanurate commercialisé par la Société HULS sous la dénomination VESTANAT T 1890/100.

La quantité de polyisocyanate utilisable selon la présente invention est choisie d'une façon telle que le rapport molaire NCO/OH est voisin de 1 et, de préférence compris entre 0,85 et 1,15.

Le polyol utilisable selon la présente invention peut être choisi parmi les polyesters-polyols, les polyéthers-polyols, les polythioéthers-polyols, les polyacétals-polyols, les polycarbonates-polyols, les polyestéramides-polyols, les polyamides-polyols, les polydiènes-polyols, l'huile de ricin et le mélange d'au moins deux des polyols précités.

A titre de polyesters portant des groupes hydroxy, on citera les produits de réaction d'alcools polyvalents, de préférence divalents, accompagnés éventuellement d'alcools trivalents, et d'acides carboxyliques polyvalents, et de préférence divalents. A la place des acides polycarboxyliques libres, on peut également utiliser pour la préparation des polyesters, les anhydrides d'acides polycarboxyliques correspondants ou esters d'acides polycarboxyliques et d'alcools inférieurs correspondants ou leurs mélanges. Les acides polycarboxyliques peuvent être de nature aliphatique, cycloaliphatique, aromatique et/ou hétérocyclique et éventuellement substitués, par exemple par des atomes d'halogène, et/ou saturés.

A titre d'illustration de tels acides carboxyliques et dérivés, on citera : les acides succinique, adipique, subérique, azélaïque, sébacique, phtalique, triméllitique, les anhydrides phtalique, tétrahydrophtalique, hexahydrophtalique, tétrachlorophtalique, endométhylène-tétrahydrophtalique, glutarique, l'acide maléique, l'anhydride maléique, l'acide fumarique, les acides gras insaturés dimérisés et trimérisés éventuellement en mélange avec des acides gras insaturés monomères comme l'acide oléique ; le téréphtalate de diméthyle et le téréphtalate de bis-glycol.

Parmi les alcools polyvalents, on citera par exemple le 1,2-éthanédiol, les 1,2-et 1,3-propanediol, les 1,4-et 2,3-butanediol, le 1,6-hexanediol, le 1,8-octanediol, le glycol néopentylique, le 1,4-bis-hydroxyméthylcyclohexane, le 2-méthyl-1,3-propanediol, le glycérol, le triméthylolpropane, le 1,2,6-hexanetriol, le 1,2,4-butanetriol, le triméthyloléthane, le pentaérythritol, le quinitol, le mannitol, le sorbitol, le formitol, le méthylglucoside, et également le diéthylène-glycol, le triéthylène-glycol, le tétra-éthylène-glycol et les polyéthylène-glycols supérieurs, le dipropylène-glycol et les propylène-glycols supérieurs et le dibutylène-glycol et les polybutylène-glycols supérieurs. Les polyesters peuvent porter des groupes carboxyle dans certaines position terminales. On peut également utiliser des polyesters de lactones, par exemple de l'epsilon-caprolactone, ou d'acides hydroxycarboxyliques, par exemple de l'acide oméga-hydroxycaproïque.

Les polyethers-polyols utilisables selon l'invention portant au moins 2, en général 2 à 8, de péférence 2 à 3 groupes hydroxy, sont ceux du type connu en soi qu'on obtient par exemple par polymérisation d'époxydes comme l'oxyde d'éthylène, l'oxyde de propylène, l'oxyde de butylène, le tétrahydrofuranne, l'oxyde de styrène ou l'épichlorhydrine sur eux-mêmes, par exemple en présence de catalyseurs de Lewis tels que BF₃, ou par addition de ces époxydes de préférence de l'oxyde d'éthylène et de l'oxyde de propylène, éventuellement en mélange ou successivement, sur des composants de départ portant des atomes d'hydrogène réactif comme l'eau, les alcools, l'ammoniaqee ou des amines, par exemple le 1,2-éthanediol, le 1,3 ou 1,2 propanediol, le triméthylolpropane, le glycérol, le sorbitol, le 4,4'-dihydroxydiphénylpropane, l'aniline, l'éthanolamine ou l'éthylène-diamine. On peut également utiliser des polyéthers de saccharose ou des polyéthers condensés sur formose.

A titre de polythioters-polyols, on citera en particulier les produits de condensation du thiodiglycol sur lui-même et/ou sur d'autres glycols, des acides dicarboxyliques, du formaldéhyde, et des acides aminocarboxyliques ou des aminoalcools. Selon la nature du second composant, les produits obtenus sont par exemple des polythioéthers mélangés, des polythioéther-esters ou des polythioéther-ester-amides.

A titre d'illustration de polyacétals-polyols, on citera par exemple ceux qu'on peut préparer à partir de glycols comme le diéthylène-glycol, le triéthylène-glycol, le 4,4'-dihydroxyéthoxydiphényldiméthylméthane, l'hexane diol et le formaldéhyde. On peut également utiliser des polyacétals obtenus par polymérisation d'écétals cyliques comme par exemple le trioxanne.

A titre d'illustration de polycarbonates portant des groupes hydroxy, on citera ceux de type connu en soi qu'on obtient par exemple par réaction de diols comme le propane diol-1,3, le butane diol-1,4 et/ou, l'hexane diol-1,6, le diéthylène glycol, le triéthylène glycol, le tétraéthylène-glycol ou le thiodiglycol, avec des carbonates de diaryle, par exemple le carbonate de diphényle ou le phosgène;

A titre d'illustration de polyesteramides-polyols et polyamides-polyols, on citera par exemple les condensats principalement linéaires obtenus à partir d'acides carboxyliques polyvalents saturés ou insaturés et de leurs anhydrides et d'aminoalcools polyvalents saturés ou insaturés, diamines, polyamines et leurs mélanges.

On peut également utiliser des polyols contenant déjà des groupes uréthane ou urée, ainsi que des polyols naturels éventuellement modifiés comme l'huile de ricin.

A titre d'illustration de polydiènes-polyols utilisables selon la présente invention, on citera les oligomères de diène conjugué hydroxytélechélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Le diène conjugué du polydiène-polyol est choisi dans le groupe comprenant le butadiène, l'isoprène, le chloroprène, le pentadiène-1,3, le cyclopentadiène.

On utilisera de préférence un polydiène-polyol à base de butadiène.

Conviennent également les copolymères de diènes conjugués et de monomères vinylique et acrylique tels que le styrène, l'acrylonitrile.

On ne sortirait pas de l'invention si on utilisait des oligomères hydroxytéléchéliques de butadiène époxydés sur la chaîne ou bien encore des oligomères hydrogènés hydroxytéléchéliques de diènes conjugués.

Selon la présente invention, les polydiènes-polyols peuvent avoir des masses moléculaires moyennes en nombre au plus égale à 7000 et de préférence comprise entre 1000 et 3000. Ils présentent des fonctionnalités allant de 1 à 5 et de préférence comprises entre 1,8 et 3.

A titre d'illustration de polydiènes-polyols, on citera les polybutadiènes hydroxytéléchéliques commercialisés par la Société ELF ATOCHEM S.A. sous les dénominations Poly Bd®R45 HT et Poly Bd®R20 LM.

La composition gélifiable utilisable selon la présente invention peut comprendre en plus du polyol un ou plusieurs polyols de faible masse molaire.

Par polyol de faible masse molaire, on entend des polyols ayant des masses molaires allant de 50 à 800.

A titre d'illustration de tels polyols, on peut citer l'éthylène glycol, le propylène glycol, le diéthylène glycol, le dipropylène glycol, les polyétherpolyols, le butane diol-1,4, l'hexane diol-1,6, l'éthyl-2 hexane diol-1,3, le N,N bis(hydroxy-2 propyl)aniline, le méthyl-3 pentanediol-1,5, le triméthylol propane, le pentaérythritol, le bis phénol A propoxylé commercialisé par la Société AKZO sous la dénomination DIANOL 320 et le mélange d'au moins deux polyols précités.

Dans l'éventualité où l'on utilise un polyol de faible masse molaire, le rapport molaire NCO/OH devra être calculé en tenant compte des fonctions hydroxyles apportées par ledit polyol de faible masse molaire.

Bien que l'emploi d'un catalyseur ne soit pas indispensable, on pourra, dans certains cas, si on le désire, utiliser un catalyseur qui peut être choisi dans le groupe comprenant des amines tertiaires, des imidazoles et des composés organométalliques;

A titre d'illustration d'amines tertiaires, on peut citer le diaza-1,4-bicyclo[2.2.2]octane (DABCO), la N,N,N',N",N"-pentaméthyldiéthylène triamine.

A titre d'illustration de composés organométalliques, on peut citer le dibutyldilaurate d'étain, le dibutylacétate d'étain, les dérivés organiques du bismuth.

La composition gélifiable utilisable dans la présente invention peut être réalisée par mélangeage à température ambiante (environ 20°C) des divers constituants par tous moyens d'agitation suffisant pour assurer une bonne dispersion des constituants.

Elle peut également être réalisée selon un protocole décrit dans la demande de brevet européen n° 0743655 A1 incorporée dans la présente demande par référence.

Selon ce protocole, on prépare séparément un mélange (B) en dissolvant dans le fluide diélectrique (A) un ou plusieurs polyols et un mélange (C) en dissolvant dans le fluide diélectrique (A), un ou plusieurs isocyanates puis ensuite on met en contact séparément chacun des mélanges (B) et (C) obtenus avec une terre adsorbante telle que l'attapulgite à une température comprise entre 20°C et 80°C pendant une durée au moins égale à une heure.

Ensuite, la terre adsorbante est éliminée des mélanges (B) et (C) par filtration et les mélanges (B) et (C) ainsi traités sont mélangés par tous moyens permettant d'obtenir une bonne homogénéisation.

La quantité pondérale de fluide diélectrique (A) dans chacun des mélanges (B) et (C) est au moins égale à 40 % et, de préférence comprise entre 85 % et 99,5 % des mélanges (B) et (C).

Les mélanges (B) et (C) peuvent également contenir un ou plusieurs additifs tels que anti-oxydants, époxydes, anthraquinone et dérivés.

L'homme du métier déterminera les quantités pondérales des mélanges (B) et (C) ainsi que les quantités ajoutées du fluide diélectrique (A), à mettre en contact lors de la préparation de ladite composition gélifiable de façon à obtenir une composition finale ayant un rapport molaire NCO/OH compris entre 0,85 et 1,15 et comprenant au moins 40 % en poids de fluide diélectrique (A).

Selon le mode préféré de la présente invention, la double imprégnation des condensateurs électriques s'effectue par l'imprégnation du bobinage avec le fluide diélectrique (A) de préférence à une température comprise entre l'ambiante (20°C) et 80°C et sous pression réduite.

Ensuite, le bobinage ainsi imprégné est porté à une température au moins égale à 60°C et, de préférence, comprise entre 70°C et 100°C pendant au moins une heure (étape a/).

Ce traitement thermique est communément désigné par formage.

Puis on élimine le fluide diélectrique (A) en excès, éventuellement après refroidissement, et on remplit le boitier avec la composition gélifiable préparée comme décrit ci-avant ; le bobinage étant totalement enrobé par ladite composition.

L'opération de remplissage du boîtier terminée, on abandonne ledit boitier à température ambiante jusqu'à ce que la réaction de gélification s'effectue totalement.

Celle-ci peut avantageusement être accélérée par chauffage et/ou par addition d'un catalyseur qui peut être ajouté au moment de la préparation de la composition gélifiable.

Ensuite, les boîtiers sont fermés.

Les condensateurs imprégnés selon le procédé de la présente invention présentent une meilleure résistance aux décharges partielles que des condensateurs entièrement imprégnés (bobinage et boitier) avec la composition gélifiable seule ou avec le liquide diélectrique (A) seul.

Ils présentent en outre l'avantage de ne pas fuir et de ne pas contribuer à la propagation d'un incendie par projection de liquide en cas d'éclatement du boitier.

Les exemples qui suivent illustrent l'invention.

**EXEMPLES**

**I CONDENSATEURS A ARMATURES EN ALUMINIUM**

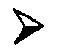 **DONNEES CONCERNANT LES CONDENSATEURS**

L'isolation des bobinages est constituée par deux films de polypropylène d'épaisseur égale à 13,6 µm. Les armatures sont constituées de feuilles d'aluminium d'épaisseur égale à 6 µm.

Les bobinages sont placés dans des boitiers parallélépipédiques fermés après imprégnation.

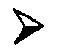 **FLUIDE DIELECTRIQUE UTILISE**

JARYLEC C101 (ci-après désigné par JARYLEC) constitué de 75 % en poids de benzyltoluènes et de 25 % en poids de (benzyl)benzyltoluènes contenant 0,8 partie en poids d'un époxyde (ERL 4221 de la Société Union Carbide) pour 100 parties en poids du mélange benzyltoluènes(benzyl)benzyltoluènes et présentant une viscosité à 20°C de 6,5 mPa.s mesurée selon la norme ASTM D-445.

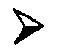 **COMPOSITION GELIFIABLE (I)**

### - Constituants de ladite composition

- JARYLEC
- PolyBd® 45 HT (ci-après désigné par PolyBd) : polybutadiène hydroxytéléchélique de Mn égal à 2800 (déterminée par chromatographie d'exclusion stérique), présentant un indice d'hydroxyle I_{OH} exprimé en milliéquivalent par gramme (meq/g) égal à 0,83, une viscosité égale à 5000 mPa.s à 30°C et une densité égale à 0,90,
- Tolonate HDT/LV (ci-après désigné par Tolonate) : tris(6-isocyanatohexyl) isocyanurate, présentant une teneur en NCO égale à 23 %, une fonctionnalité d'environ 3,4 et une viscosité à 25°C égale à 1200 (± 300) mPa.s.

### - Préparation

On dissout séparément dans du Jarylec, d'une part du PolyBd (mélange B) et d'autre part du Tolonate (mélange C). On ajoute à chacun des mélange (B) et (C), 3 g d'attapulgite pour 100 g de mélange, on agite les mélanges séparément à température ambiante pendant 3 heures, puis on filtre les mélanges sous pression réduite. Ensuite, les mélanges (B) et (C) sont mis en contact dans un réacteur en verre muni d'une agitation.

La composition gélifiable (I) ainsi préparée comprend en poids :
94 % de Jarylec,
5,2 % de PolyBd,
0,8 % de Tolonate.

### > IMPREGNATION DES CONDENSATEURS (conforme à l'invention).

Les bobinages des condensateurs sont imprégnés sous pression réduite à température ambiante avec le JARYLEC. Ensuite, ils sont formés à 90°C pendant 168 heures pour permettre le gonflement du film de polypropylène, refroidis à température ambiante puis vidés du JARYLEC en excès.

Les boitiers contenant les bobinages ainsi imprégnés sont remplis sous pression réduite avec la composition gélifiable (I) à laquelle on a ajouté 500 ppm de dibutyldilaurate d'étain. On revient à pression atmosphérique et on les garde à température ambiante jusqu'à gélification complète puis on ferme les boîtiers.

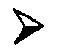 **VIEILLISSEMENT DES CONDENSATEURS**

2 boîtiers contenant 10 bobinages ont été imprégnés par :
- du JARYLEC seul (boîtier et bobinage),
- la composition gélifiable (I) seule (boîtier et bobinage),
et, selon l'invention, par du JARYLEC puis la composition gélifiable (I) selon le protocole de l'invention décrit ci-avant. Les condensateurs ont été soumis pendant 500 heures à 90°C à une tension alternative de 2400 V (90 V/µm). On a mesuré ensuite à température ambiante (20°C) la tension de claquage en courant continu sur les condensateurs non claqués.

Les résultats sont reportés dans le graphique 1 et le tableau 1.

Dans le graphique 1, nous avons représenté en ordonnée, le nombre de condensateurs en vie et en abscisse le temps de l'essai en heures.

Dans ce graphique 1, on représente également par
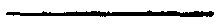 l'imprégnant JARYLEC seul,
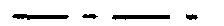 l'imprégnant composition gélifiable (I) seul,
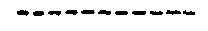 JARYLEC/Composition gélifiable (I),

**TABLEAU 1**

| | | **TENSION DE CLAQUAGE DES BOBINAGES EN VIE** | |
|---|---|---|---|
| **IMPREGNANT** | **NOMBRE DE BOBINAGES CLAQUES** | **MOYENNE (KV)** | **ECART-TYPE (%)** |
| JARYLEC | 10 | 7,0 | 15,4 |
| Composition gélifiable (I) | 20 | - | - |
| JARYLEC/Composition gélifiable (I) | 3 | 7,0 | 8,6 |

**II CONDENSATEURS A FILM METALLISE**

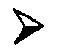 **DONNEES CONCERNANT LES CONDENSATEURS**

Les bobinages sont fabriqués avec un film de polypropylène rugueux métallisé aluminium, commercialisé par la Société BOLORE sous la dénomination PP2.

Le film a une épaisseur de 7,4 µm :

Les bobinages sont "schoopés" au zinc pour permettre les connections et sont placés en boîtiers parallélépipédiques sertis.

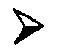 **FLUIDE DIELECTRIQUE UTILISE**

- Dibutylsébaçate (ci-après désigné par DBS) présentant une viscosité à 20°C égale à 3,9 mPa.s.

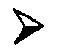 **COMPOSITION GELIFIABLE (II)**

### - Constituants de ladite composition

- DBS,
- Poly Bd,
- Tolonate.

### - Préparation

On traite préalablement le DBS à l'attapulgite. Pour ce faire, on mélange le DBS additionné de 3 % en poids d'attapulgite à 60°C pendant 4 heures, on filtre sous pression réduite puis on dégaze à 60°C.

On mélange ensuite le DBS traité, le Poly BD et le Tolonate.

La composition gélifiable (II) ainsi préparée comprend en poids :
- 93,60 % de DBS,
- 5,55 % de Poly Bd,
- 0,85 % de Tolonate.

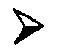 **IMPREGNATION DES CONDENSATEURS** (conforme à l'invention) :

Avant imprégnation, les condensateurs subissent un traitement de 48 heures à 70°C, sous pression réduite, puis, après retour à 60°C, on impregne sous pression réduite, les bobinages avec du DBS traité comme décrit ci-avant. Ensuite, ils sont formés à 60°C pendant 24 heures, puis on les vide du DBS en excès.

Les boîtiers contenant les bobinages ainsi imprégnés sont remplis sous pression réduite avec la composition gélifiable (II) à laquelle on a ajouté 500 ppm de dibutyldilaurate d'étain. Ensuite, on les garde une journée à 60°C puis après avoir été fermés, on les porte à 90°C pendant une semaine.

### > VIEILLISSEMENT DES CONDENSATEURS SOUS TENSIONS CONTINUES CROISSANTES :

Un condensateur constitué par un boîtier, contenant 2 bobinages, imprègné selon le protocole de l'invention décrit ci-avant par du DBS puis la composition gélifiable (II), un condensateur constitué par un boîtier, contenant 2 bobinages, imprégné par la composition gélifiable (II) seule (boîtier et bobinage) et un condensateur constitué par un boîtier, contenant 1 bobinage, imprégné par du DBS seul (boîtier et bobinage) sont soumis à des tensions continues croissantes par paliers de 24 heures.

La température est maintenue à 55°C pendant toute la durée de l'essai (pendant les week-ends, la tension est ramenée au niveau du premier palier 1480 V, 200 V/µm).

Après chaque palier, la capacité des bobinages est mesurée.

Le comportement des condensateurs est évalué sous la forme de courbes : variation de capacité ΔC/C = f (gradient de tension) qui sont reportées sur le graphique 2.

Dans ce graphique, nous avons représenté en ordonnée la variation de capacité ΔC/C exprimée en % à 55°C et en abscisse le gradient de tension exprimé en V/µm.

Dans ce graphique 2, on représente par :
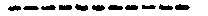 l'imprégnant DBS seul,
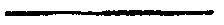 l'imprégnant composition gélifiable (II) seul,
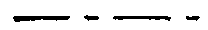 l'imprégnant DBS/composition gélifiable (II).

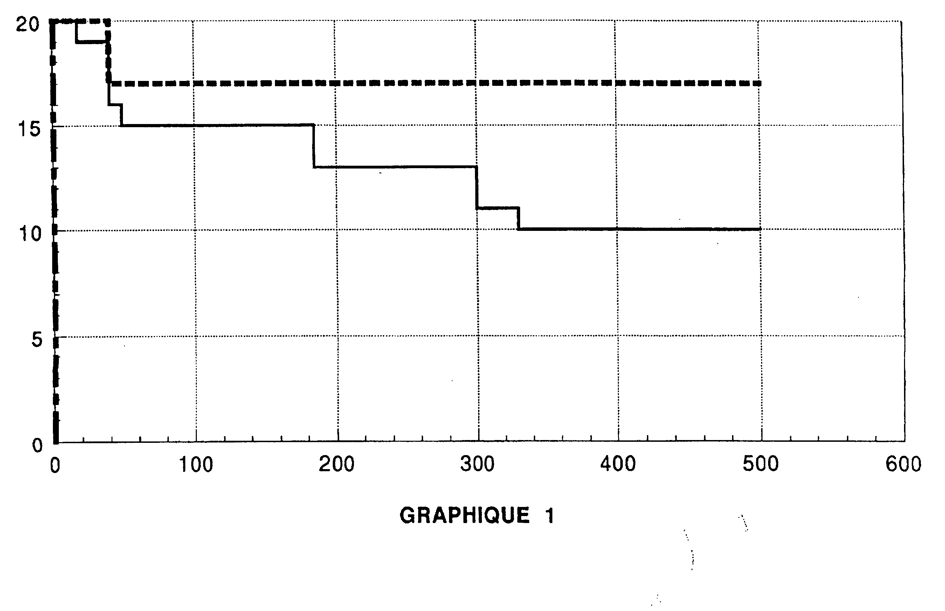

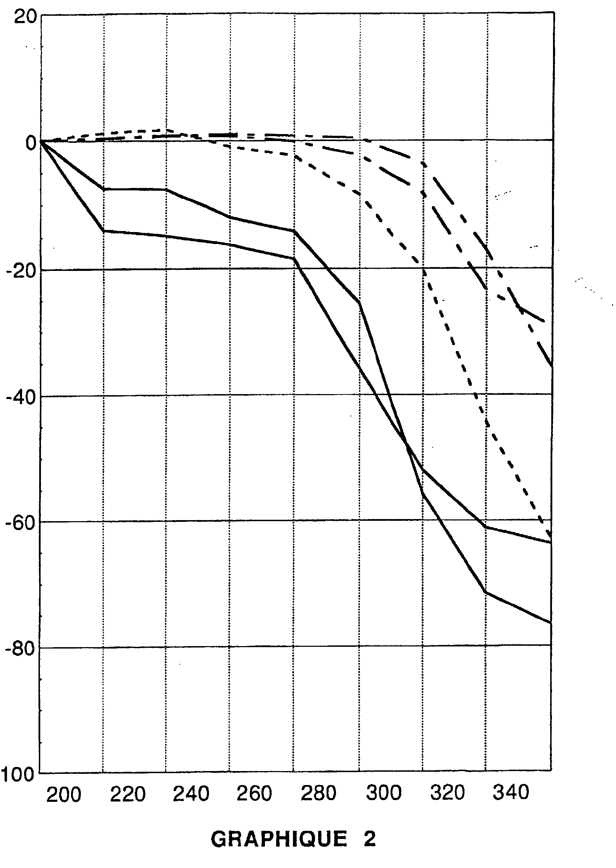

## Revendications

1. Procédé de double imprégnation de condensateurs électriques comprenant au moins un bobinage, et un boîtier, **caractérisé en ce que** l'on effectue les étapes suivantes :
a) on imprègne le bobinage avec un fluide diélectrique (A), puis on le soumet éventuellement à un traitement thermique,
b) on élimine l'excès dudit fluide (A),
c) on remplit le boîtier contenant le bobinage imprégné en a) avec une composition gélifiable comprenant au moins un polyol, au moins un polyisocyanate, éventuellement au moins un catalyseur et le fluide diélectrique (A) utilisé en a) et,
d) on gélifie ladite composition gélifiable.

2. Procédé selon la revendication 1, **caractérisé en ce que** dans l'étape a), on imprègne le bobinage avec le fluide (A) à une température comprise entre l'ambiante, c.à.d. 20°C, et 80°C sous pression réduite puis l'on porte le bobinage ainsi imprégné à une température au moins égale à 60°C, et de préférence, à une température comprise entre 70°C et 100°C, pendant au moins une heure.

3. Procédé selon l'une des revendications 1 ou 2, **caractérisé en ce que** le fluide diélectrique (A) est choisi dans le groupe constitué par les alkylbenzènes tels que le décylbenzène, le dodécylbenzène ; les composés alkylpolyaromatiques comme le monoisopropylbiphényle (MIPB), les phénylxylyléthanes (PXE) ; les mélanges de benzyltoluènes et (benzyl)-(benzyl)toluènes, les mélange de mono-et bis (méthylbenzyl)xylènes, les mélanges de (benzyl)toluène et de diphényléthane ; les phtalates d'alkyle tels que le dibutylphtalate, le dioctylphtalate, les esters aliphatiques tels que le dioctylsébaçate, le dioctyladipate, le dibutylsébaçate ; les huiles végétales telles que les huiles de colza, les huiles de maïs, l'huile de ricin et les huiles de soja, ainsi que la combinaison d'au moins deux des fluides diélectriques précédemment mentionnés.

4. Procédé selon l'une des revendications 1 à 3, **caractérisé en ce que**, dans le cas où les condensateurs ont des armatures constituées de feuilles d'aluminium, l'on utilise comme fluide diélectrique (A) un mélange de benzyltoluènes et de (benzyl)benzyltoluènes.

5. Procédé selon l'une des revendications 1 à 3, **caractérisé en ce que**, dans le cas où les condensateurs ont des armatures métallisées, l'on utilise comme fluide diélectrique (A), une huile de colza, du dibutylsébaçate, du dioctylphtalate, du dodécylbenzène, une mélange d'au moins deux des fluides diélectriques mentionnés ci-avant ou un mélange d'huile de colza et du mélange benzyltoluènes-(benzyl)benzyltoluènes.

6. Procédé selon l'une des revendications 1 ou 2, **caractérisé en ce que** le polyol est un polybutadiène hydroxytéléchélique.

7. Procédé selon l'une des revendications 1 ou 2, **caractérisé en ce que** le polyisocyanate contient dans sa molécule un cycle isocyanurate.

8. Procédé selon l'une des revendications 1 ou 2, **caractérisé en ce que** la composition gélifiable comprend un catalyseur.

9. Procédé selon la revendication 8, **caractérisé en ce que** le catalyseur est le dibutyldilaurate d'étain.

10. Condensateur à armatures en aluminium imprégné selon l'une des revendications 1 à 9.

11. Condensateur à film métallisé imprégné selon l'une des revendications 1 à 9.

## Patentansprüche

1. Doppeltes Imprägnierungsverfahren für elektrische Kondensatoren, die mindestens eine Wicklung und ein Gehäuse umfassen, **dadurch gekennzeichnet, dass** man die folgenden Schritte durchführt:
a) man imprägniert die Wicklung mit einem dielektrischen Fluid (A) und unterzieht sie dann eventuell einer Wärmebehandlung,
b) man beseitigt das überschüssige Fluid (A),
c) man füllt das Gehäuse, das die in Schritt a) imprägnierte Wicklung enthält, mit einer gelierbaren Zusammensetzung, enthaltend mindestens ein Polyol, mindestens ein Polyisocyanat, eventuell mindestens einen Katalysator und das in Schritt a) verwendete dielektrische Fluid (A), und
d) lässt die gelierbare Zusammensetzung gelieren.

2. Verfahren nach Anspruch 1, **dadurch gekennzeichnet, dass** in Schritt a) die Wicklung mit dem Fluid (A) bei einer Temperatur zwischen Raumtemperatur, d.h. 20°C, und 80°C unter verringertem Druck imprägniert wird und dann die auf diese Weise imprägnierte Wicklung mindestens eine Stunde auf eine Temperatur von mindestens gleich 60°C, vorzugsweise auf eine Temperatur zwischen 70°C und 100°C, gebracht wird.

3. Verfahren nach Anspruch 1 oder 2, **dadurch gekennzeichnet, dass** das dielektrische Fluid (A) aus der Gruppe bestehend aus Alkylbenzolen, wie Decylbenzol, Dodecylbenzol; alkylpolyaromatischen Verbindungen, wie Monoisopropylbiphenyl (MIPB), Phenylxylylethanen (PXE); Mischungen von Benzyltoluolen und (Benzyl)-(benzyl)toluolen, Mischungen von Mono- und Bis(methylbenzyl)xylolen, Mischungen von (Benzyl)toluol und Diphenylethan; Alkylphthalaten, wie Dibutylphthalat, Dioctylphthalat; aliphatischen Estern, wie Dioctylsebacat, Dioctyladipat, Dibutylsebacat; pflanzlichen Ölen, wie Rapsölen, Maisölen, Ricinöl und Sojaölen sowie der Kombination von mindestens zwei der oben erwähnten dielektrischen Fluide ausgewählt wird.

4. Verfahren nach einem der Ansprüche 1 bis 3, **dadurch gekennzeichnet, dass**, falls die Kondensatoren Beläge aufweisen, die von Aluminiumfolien gebildet sind, als dielektrisches Fluid (A) eine Mischung von Benzyltoluolen und (Benzyl)benzyltoluolen verwendet wird.

5. Verfahren nach einem der Ansprüche 1 bis 3, **dadurch gekennzeichnet, dass**, falls die Kondensatoren metallisierte Beläge aufweisen, als dielektrisches Fluid (A) ein Rapsöl, Dibutylsebacat, Dioctylphthalat, Dodecylbenzol, eine Mischung von mindestens zwei der oben erwähnten dielektrischen Fluide oder eine Mischung aus Rapsöl und der Mischung Benzyltoluole(Benzyl)benzyltoluole verwendet wird.

6. Verfahren nach Anspruch 1 oder 2, **dadurch gekennzeichnet, dass** das Polyol ein hydroxytelecheles Polybutadien ist.

7. Verfahren nach Anspruch 1 oder 2, **dadurch gekennzeichnet, dass** das Polyisocyanat in seinem Molekül einen Isocyanurat-Cyclus enthält.

8. Verfahren nach Anspruch 1 oder 2, **dadurch gekennzeichnet, dass** die gelierbare Zusammensetzung einen Katalysator enthält.

9. Verfahren nach Anspruch 8, **dadurch gekennzeichnet, dass** der Katalysator Zinndibutyldilaurat ist.

10. Kondensator mit Belägen aus nach einem der Ansprüche 1 bis 9 imprägniertem Aluminium.

11. Kondensator mit metallisierter, nach einem der Ansprüche 1 bis 9 imprägnierter Folie.

## Claims

1. Process for double impregnation of electrical capacitors including at least one coil winding and a casing, **characterized in that** the following steps are performed:
a) the coil winding is impregnated with a dielectric fluid (A) and then optionally subjected to a heat treatment;
b) the excess of the said fluid (A) is removed;
c) the casing containing the coil winding impregnated in a) is filled with a gelable composition comprising at least one polyol, at least one polyisocyanate, optionally at least one catalyst and the dielectric fluid (A) employed in a); and
d) the said gelable composition is gelled.

2. Process according to Claim 1, **characterized in that** in step a) the coil winding is impregnated with the fluid (A) at a temperature of between the ambient, i.e. 20°C, and 80°C at reduced pressure and the coil winding thus impregnated is next heated to a temperature of at least 60°C, and preferably to a temperature of between 70°C and 100°C, for at least one hour.

3. Process according to either of Claims 1 and 2, **characterized in that** the dielectric fluid (A) is chosen from the group consisting of alkylbenzenes such as decylbenzene or dodecylbenzene, alkylpolyaromatic compounds like monoisopropylbiphenyl (MIPB) or phenylxylylethanes (AXE), mixtures of benzyltoluenes and (benzyl)benzyltoluenes, mixtures of mono- and bis(methylbenzyl)xylenes, mixtures of (benzyl)toluene and of diphenylethane, alkyl phthalates such as dibutyl phthalate or dioctyl phthalate, aliphatic esters such as dioctyl sebacate, dioctyl adipate and dibutyl sebacate, vegetable oils such as rapeseed oils, corn oils, castor oil and soya oils, and the combination of at least two of the abovementioned dielectric fluids.

4. Process according to one of Claims 1 to 3, **characterized in that**, in the case where the capacitors have plates consisting of sheets of aluminium, a mixture of benzyltoluenes and of (benzyl)benzyltoluenes is employed as dielectric fluid (A).

5. Process according to one of Claims 1 to 3, **characterized in that**, in the case where the capacitors have metallized plates, a rapeseed oil, dibutyl sebacate, dioctyl phthalate, dodecylbenzene, a mixture of at least two of the abovementioned dielectric fluids or a mixture of rapeseed oil and of the benzyltoluenes/(benzyl)benzyltoluenes mixture is employed as dielectric fluid (A).

6. Process according to either of Claims 1 and 2, **characterized in that** the polyol is a hydroxytelechelic polybutadiene.

7. Process according to either of Claims 1 and 2, **characterized in that** the polyisocyanate contains an isocyanurate ring in its molecule.

8. Process according to either of Claims 1 and 2, **characterized in that** the gelable composition includes a catalyst.

9. Process according to Claim 8, **characterized in that** the catalyst is dibutyltin dilaurate.

10. Capacitor with aluminium plates, impregnated according to one of Claims 1 to 9.

11. Capacitor with metallized film, impregnated according to one of Claims 1 to 9.
